(19) Europäisches Patentamt
European Patent Office
Office européen des brevets

(11) **EP 0 873 497 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **96945759.7**

(22) Anmeldetag: **02.12.1996**

(51) Int Cl.[7]: **G01D 5/16**, G01D 5/14

(86) Internationale Anmeldenummer:
**PCT/DE96/02304**

(87) Internationale Veröffentlichungsnummer:
**WO 97/25592 (17.07.1997 Gazette 1997/31)**

(54) **VORRICHTUNG ZUR DETEKTIERUNG VON AUSLENKUNGEN EINES MAGNETISCHEN KÖRPERS**

DEVICE FOR THE DETECTION OF DEFLECTIONS OF A MAGNETIC BODY

DISPOSITIF DE DETECTION DE DEVIATIONS D'UN CORPS MAGNETIQUE

(84) Benannte Vertragsstaaten:
**DE FR GB IT SE**

(30) Priorität: **10.01.1996 DE 19600616**

(43) Veröffentlichungstag der Anmeldung:
**28.10.1998 Patentblatt 1998/44**

(73) Patentinhaber: **ROBERT BOSCH GMBH**
**70442 Stuttgart (DE)**

(72) Erfinder:
• **ZABLER, Erich**
  **D-76297 Stutensee (DE)**
• **DUKART, Anton**
  **D-76744 Wörth (DE)**

(56) Entgegenhaltungen:
**EP-A- 0 390 261      EP-A- 0 726 448**
**DE-A- 4 341 810**

EP 0 873 497 B1

**Beschreibung**

Die Erfindung betrifft eine Vorrichtung zur Detektierung von Auslenkungen eines magnetischen Körpers

Vorrichtungen dieser Art werden insbesondere bei der Messung relativ kleiner Wege von auslenkbaren Körpern, beispielsweise bei der Erfassung des Ventilnadelhubs in Einspritzventilen für Kraftfahrzeuge, eingesetzt. Um hier auf engstem Raum die kleinen Auslenkbewegungen zu erfassen werden alternativ auch optische Verfahren oder Messungen in einem Hochfrequenz-Resonanzraum angewandt, die jedoch konstruktiv sehr aufwendig sind und hohe Kosten bei den Sensoren verursachen.

Es ist bereits aus der EP 0 427 882 B1 eine Vorrichtung bekannt, bei der ein Permanentmagnet als auslenkbarer Körper sich im Bereich eines magnetfeldempfindlichen Sensors bewegt. Die Bewegungsachse des Körpers verläuft bei dieser bekannten Vorrichtung in einem konstruktiv vorgegebenen Abstand parallel über der Ebene des Sensors. Als ortsfester Sensor ist hier ein sog. magnetoresistiver Sensor vorhanden, der in der Ebene seiner sensitiven Schicht unter Ausnutzung des anisotropen magnetoresistiven Effekts (AMR) Änderungen der Feldstärke aufgrund einer Bewegung des Magneten erfaßt.

Der Sensor der bekannten Vorrichtung besteht aus einer Anzahl jeweils zu einer Brücke verschalteten magnetfeldempfindlichen Widerständen, deren Widerstandswerte sich bei einem Durchtritt von magnetischen Feldlinien in ihrer sensitiven Ebene ändern und somit so einer Verstimmung der Brücke führen. Das Brückenausgangssignal ist somit als Detektionssignal heranziehbar. Die räumliche Ausdehnung der Sensorebene stellt hierbei insbesondere bei sehr kleinen auslenkbaren Körpern eine kritische Größe dar.

In der EP-A-0 390 261 wird eine Vorrichtung zum Detektieren der Stellung eines beweglichen permanentmagnetischen Körpers mittels einem ortsfesten Sensor beschrieben. Die magnetfeldempfindliche Ebene des Sensors liegt dabei radial zur Bewegungsachse des Körpers. Dieser Sensor hat aufgrund seiner räumlich verteilten Struktur nicht die Wirkung einer Gradientensonde.

Vorteile der Erfindung

Die Vorrichtung der eingangs beschriebenen Art ist in der erfindungsgemäßen Weiterbildung mit den Merkmalen des Anspruchs 1 dadurch vorteilhaft, daß durch die vorgeschlagene Anordnung des Permanentmagneten als beweglicher Körper im Verhältnis zur Lage des Sensors eine hohe Auflösung bei der Erfassung der Bewegung besonders bei kleinen Abmessungen des Permanentmagneten erreicht wird. Hierbei ist eine volle Aussteuerung des Sensors möglich. Bei einer Anwendung der Erfindung zur Erfassung von Bewegungen einer Ventilnadel bei Einspritzdüsen kann bei einer Länge ($h_{Magnet}$) des Permanentmagneten von etwa 1 bis 1,5 mm folgender Meßbereich ausgenutzt werden:

$$\text{Wegmeßbereich} \approx 0,6 * h_{Magnet}.$$

Mit der erfindungsgemäßen Vorrichtung kann auf einfache Weise der bekannte Meßeffekt verstärkt werden, indem auch räumlich entferntere Feldbereiche mit ihren radialen und tangentialen Feldkomponenten noch erfaßt werden. Auch eine Bestimmung der Bewegungsgeschwindigkeit des bewegten Körpers ist durch eine elektronische Differentation des Ausgangssignals des Sensors leicht durchführbar.

In vorteilhafter Weise kann als Sensor auch ein Hall-Element als magnetfeldempfindlicher Sensor in der oben beschriebenen Art und Weise angeordnet werden. Hierbei können auch die Auswerteschaltungen bereits in der Sensorebene mit angeordnet werden, so daß sich ein Sensor mit einer ausgezeichneten Nullpunktstabilität ergibt.

Zeichnung

Die erfindungsgemäße Vorrichtung wird anhand der Zeichnungen erläutert. Es zeigen:

Figur 1 eine Prinzipdarstellung einer bekannten Vorrichtung mit einem bewegten Permanentmagneten;

Figur 2 ein elektrisches Ersatzschaltbild einer Brückenanordnung der magnetfeldempfindlichen Widerstände eines Sensors nach Figur 1;

Figur 3 die erfindungsgemässe Anordnung von Sensor und Permanentmagnet;

Figur 4 eine Darstellung der tangentialen und radialen Feldlinienkomponenten des. Permanentmagneten und in den verschiedenen möglichem Anordnungen des Sensors;

Figur 5 den Verlauf des Ausgangssignals des Sensors bei den verschiedenen möglichem Anordnungen des Sensors in Abhängigkeit von der Wirkung der Tangentialkomponente bzw. der Radialkomponente des Magnetfeldes.

Beschreibung des Ausführungsbeispiels

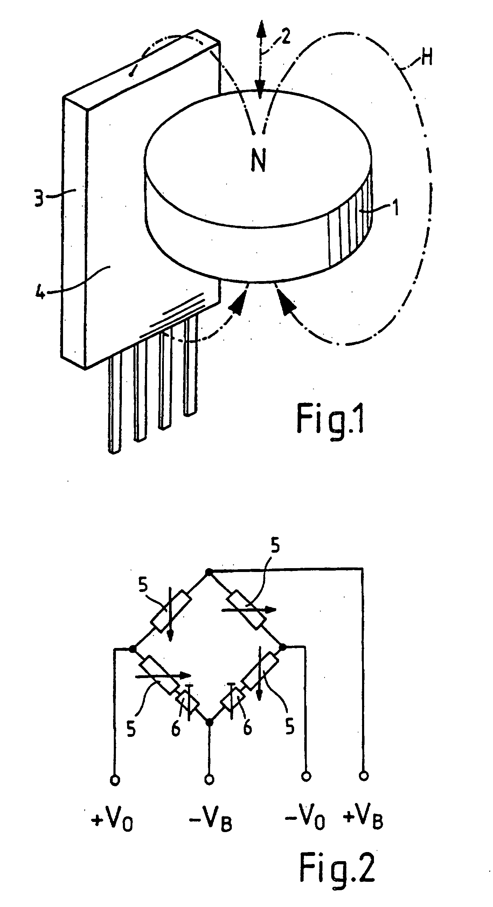

In Figur 1 ist eine Vorrichtung zur Erfassung der Bewegung eines Permanentmagneten 1 in der Bewegungsrichtung 2 mit einem orts- oder gehäusefesten Sensor 3 schematisch dargestellt. Der Magnet 1 kann Bestandteil eines bewegbaren mechanischen Teils sein, dessen genaue Stellung relativ zu einem hier nicht dargestellten Gehäuse erfaßt werden soll. Beispielsweise kann dieser Permanentmagnet Bestandteil einer Ventilnadel eines Einspritzventils für die Motorsteuerung eines Kraftfahrzeuges sein, dessen Ventilstellung jederzeit abrufbereit sein sollte.

Der Permanentmagnet 1 erzeugt ein magnetisches Feld H dessen Feldlinien auch durch den ortsfesten Sensor 3 hindurchtreten und hier in Abhängigkeit von der Stellung des Permanentmagneten 1 zu einer Sensorebene 4 ein Ausgangssignal hervorrufen. Bei der Konstruktion der Vorrichtung ist erforderlich, daß somit das Gehäuse mit dem an ihm befestigten Sensor aus nichtmagnetischem Material besteht und die Enfernung zwischen dem Permanentmagneten 1 und dem Sensor 3 nicht zu groß ist.

Figur 2 zeigt einen solchen Sensor 3 als elektrisches Schaltbild, bei dem Dünnschicht-Widerstandselemente 5, beispielsweise aus Nickel-Eisen (NiFe), mit der äußeren Beschaltung und mit Trimmwiderständen 6 vorhanden sind. Bei diesem Ersatzschaltbild liegt an einer Brückendiagonalen die Speisespannung $V_B$ und an der anderen Brückendiagonalen die Ausgangsspannung $V_o$ als Sensorausgangssignal an. Die maximalen Ausgangsspannungen $V_o$ dieser Schaltungen liegen typischerweise im Bereich von 50 bis 100 mV bei 5 V Versorgungsspannung $V_b$. Die Brückenwiderstände 5 weisen paarweise eine gegensinnige Meßempfindlichkeit auf, wodurch sich bei einer Verschiebung des Einflusses des Magnetfeldes in der Sensorebene auch eine Verstimmung der Brücke ergibt.

Bei inhomogenen Feldern, wie sie in der Umgebung kleiner Magnete auftreten, hat der oben beschriebene Sensor 3 aufgrund seiner räumlich verteilten Struktur die Wirkung einer Gradienten-Sonde, d.h. er erfaßt den Feldstärkeunterschied, welcher an den beiden in geringem Abstand voneinander angeordneten Halbbrücken herrscht.

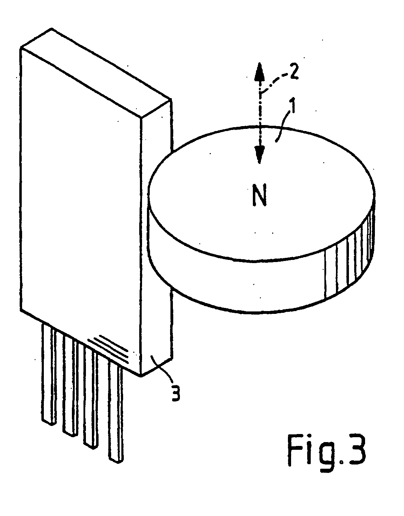

Die erfindungsgemäße Anordnung des Sensors 3 im Verhältnis zur Bewegungsrichtung 2 des Permanentmagneten 1 zeigt Figur 3.

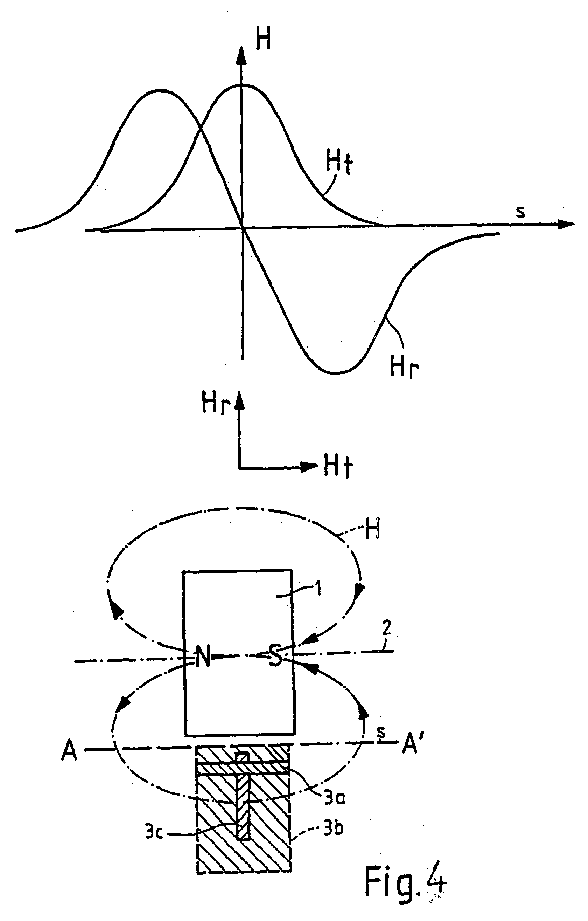

Im oberen Teil der Figur 4 ist der Verlauf der Tangentialkomponente $H_t$ sowie der Verlauf der Radialkomponente Hr der Feldstärke H in Abhängigkeit vom Weg s entlang einer zur Bewegungsrichtung 2 parallelen Linie A-A' gezeigt. Im unteren Teil der Figur 4 sind der Permanentmagnet 1 und die drei möglichem räumlichen Stellungen 3a, 3b und 3c des Sensors 3 zu der Bewegungsrichtung 2 dargestellt.

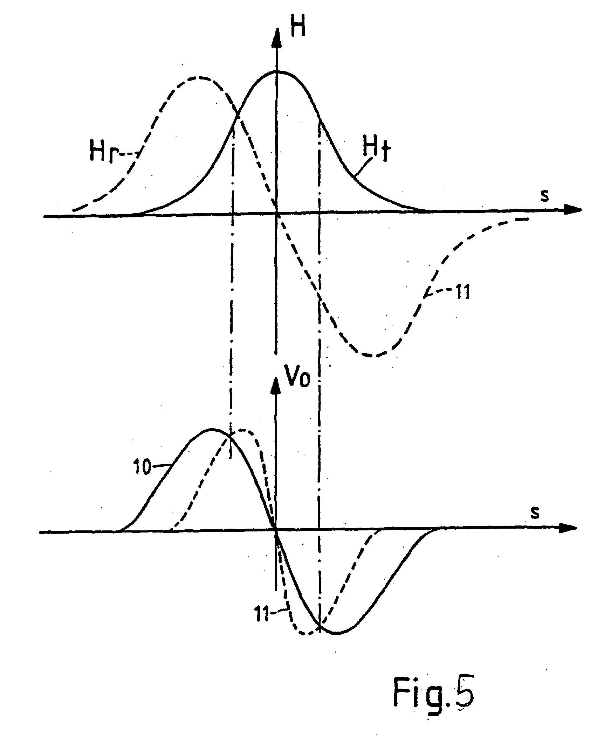

Die unterschiedlichen Verläufe des Ausgangssignals $V_o$ des Sensors 3 sind in der Figur 5 dargestellt. Der Sensor 3a gemäß Figur 4 (unten), der vollständig parallel zur Bewegungsrichtung 2 liegt, spricht hierbei ausschließlich auf den tangentialen Gradienten der Feldstärke $H_t$ an und hat den in der Figur 5 mit der Ziffer 10 dargestellten Verlauf. Diese Sensoranordnung 3a nutzt somit im wesentlichen den magnetnahen Bereich höherer Feldstärken.

Beim Sensor 3b gemäß Figur 4 (unten), des gemäß der Erfindung, wirkt zusätzlich noch die räumliche Änderung der radialen Feldkomponente $H_r$ auf den Sensor ein, was den Meßeffekt verstärkt. Andererseits erfaßt dieser Sensor 3b mit einem großen Teil seiner Sensorebene 4 nur die weiter in den Raum greifenden, schwächeren Feldbereiche des Permanentmagneten 1, so daß dieser Signalverlauf bezüglich der Tangentialkomponente $H_t$ sich nicht wesentlich von dem Verlauf 10 unterscheidet und hier nicht separat dargestellt ist.

Der Sensor 3c verhält sich aufgrund seiner Stellung zur Bewegungsrichtung 2 nicht als Gradientensonde, da er bezüglich der Bewegungsrichtung 2 lediglich die Ausdehnung seiner Schichtdicke (ca. 40 nm) besitzt. Dieser Sensor 3c reagiert ausschließlich auf den lokalen Wert der radialen Feldkomponente $H_r$ welche jedoch in der Mitte des Permanentmagneten 1 (vgl. Figur 4) über den Meßweg s hinweg ihr Vorzeichen wechselt. Diese Anordnung weist somit eine noch höhere Meßempfindlichkeit auf, d.h. die maximal mögliche Sensoraussteuerung wird bei einer noch kleineren Bewegung des Permanentmagneten 1 erreicht. Das Ausgangssignal $V_o$ mit einem relativ steilen Nulldurchgang in der Mitte des Permanentmagneten 1 ist in der Figur 5 mit der Ziffer 11 gekennzeichnet.

**Patentansprüche**

1. Vorrichtung zur Detektierung der Stellung eines permanentmagnetischen Körpers mit radial und tangential wirkender Magnetfeldkomponente, bei der der Körper (1) mindestens in einer Richtung bewegbar ist und einem ortsfesten Sensor (3b), mit dem eine Änderung des Magnetfelds des Körpers (1) aufgrund der Stellung erfaßbar ist, wobei die magnetfeldempfindlichen Teile des Sensors (3b) derart in einer Ebene angeordnet sind, daß mit den in dieser Ebene liegenden Richtungskomponenten des Magnetfeldes H ein elektrisches Ausgangssignal erzeugbar ist, wobei sich die magnetfeldempfindliche Ebene (4) des Sensors (3b) in einer Ausdehnungsrichtung radial von der Bewegungsachse (2) des auslenkbaren Körpers (1) weg erstreckt und wobei der Sensor (3b) aufgrund seiner räumlich verteilten Struktur die Wirkung einer Gradientensonde hat.

2. Vorrichtung nach Anspruch 1, **dadurch gekennzeichnet, daß** der Sensor (3b) auf den radialen Gradienten der Feldstärke $H_r$ anspricht.

3. Vorrichtung nach Anspruch 1, **dadurch gekennzeichnet, daß** der Sensor (3b) auf den tangentialen Gradienten der Feldstärke $H_t$ und auf die räumliche Änderung der radialen Feldkomponente $H_r$ anspricht.

4. Vorrichtung nach einem der Ansprüche 1 bis 3, **da-**

**durch gekennzeichnet, daß** der Sensor (3b) aus magnetfeldempfindlichen Widerständen (5) in einer Brückenschaltung aufgebaut ist, wobei die jeweils gegenüber liegenden Widerstände eine gegensinnige Meßempfindlichkeit aufweisen.

5. Vorrichtung nach einem der Ansprüche 1 bis 4, **dadurch gekennzeichnet, daß** der Sensor (3b) den Feldstärkeunterschied, welcher an den beiden in geringem Abstand voneinander angeordneten Halbbrücken herrscht, erfaßt.

## Claims

1. Apparatus for detection of the position of a permanent-magnet body having radially and tangentially acting magnetic field components, in which the body (1) can move in at least one direction, and having a fixed-position sensor (3b) by means of which any change in the magnetic field from the body (1) resulting from the position can be detected, with those parts of the sensor (3b) which are sensitive to magnetic fields being arranged in a plane in such a manner that an electrical output signal can be produced using the direction components of the magnetic field H which lie in this plane, with the plane (4) in which the sensor (3b) is sensitive to magnetic fields extending in a direction radially away from the movement axis (2) of the body (1) which can be deflected, and with the sensor (3b) having the effect of a gradient probe by virtue of its physically distributed structure.

2. Apparatus according to Claim 1, **characterized in that** the sensor (3b) responds to the radial gradient of the field strength $H_r$.

3. Apparatus according to Claim 1, **characterized in that** the sensor (3b) responds to the tangential gradient of the field strength $H_t$ and to the three-dimensional change in the radial field component $H_r$.

4. Apparatus according to one of Claims 1 to 3, **characterized in that** the sensor (3b) is formed from resistors (5) which are sensitive to magnetic fields and are connected in a bridge circuit, with the respectively opposite resistors having a measurement sensitivity in opposite senses.

5. Apparatus according to one of Claims 1 to 4, **characterized in that** the sensor (3b) detects the field-strength difference which is present between the two half bridges, which are arranged a short distance apart from one another.

## Revendications

1. Dispositif pour détecter la position d'un corps à aimantation permanente avec des composantes de champ magnétique agissant radialement et tangentiellement, selon lequel, le corps (1) peut se déplacer au moins dans une direction, et

   un capteur (3b) fixe, permettant de détecter une variation du champ magnétique du corps (1) du fait de la position,
   les pièces sensibles au champ magnétique du capteur (3b) sont installées dans un plan de façon à générer un signal de sortie électrique à l'aide des composantes de direction du champ magnétique H situées dans ce plan, et

   dans lequel

   le plan (4) sensible au champ magnétique du capteur (3b) s'étend dans une direction d'extension radiale par rapport à l'axe de mouvement (2) de l'organe mobile (1), et
   le capteur (3b) fonctionne comme une sonde à gradients du fait de sa structure répartie dans l'espace.

2. Dispositif selon la revendication 1, **caractérisé en ce que** le capteur (3b) répond aux gradients radiaux de l'intensité de champ $H_r$.

3. Dispositif selon la revendication 1, **caractérisé en ce que** le capteur (3b) répond aux gradients tangentiels de l'intensité de champ Ht et à la variation dans l'espace de la composante de champ, radiale Hr.

4. Dispositif selon l'une quelconque des revendications 1 à 3, **caractérisé en ce que** le capteur (3b) est formé de résistances (5) sensibles au champ magnétique, ces résistances étant regroupées selon un montage en pont et les résistances chaque fois opposées ont une sensibilité de mesure, allant en sens opposé.

5. Dispositif selon l'une quelconque des revendications 1 à 4, **caractérisé en ce que** le capteur (3b) détecte la différence d'intensité de champ qui règne au niveau des deux demi-ponts écartés l'un de l'autre à une faible distance.

Fig.1

$+V_0 \qquad -V_B \qquad -V_0 \quad +V_B$

Fig.2

N

Fig.3

Fig.4

Fig.5